# EUROPEAN PATENT APPLICATION

(11) **EP 4 741 894 A1**
(43) Date of publication of application: **13.05.2026**
(21) Application number: 24212190.3
(22) Date of filing: 11.11.2024
(51) Int. Cl.: G02B 6/12, G02B 6/122, G02B 6/30

(54) **PHOTONIC PRODUCT FOR IN-PLANE CHIP COUPLING OPERATING AT CRYOGENIC TEMPERATURES, AND METHOD OF MANUFACTURING THE SAME**

(71) Applicant: Nederlandse Organisatie voor toegepast- natuurwetenschappelijk onderzoek TNO, 2595 DA 's-Gravenhage (NL)
(72) Inventor: TCHEBOTAREVA, Anna, 2595 DA 's-Gravenhage (NL); VAN ESSEN, Bernard Henk Marius Francois, 2595 DA 's-Gravenhage (NL); DE DOOD, Michiel Jacob Andries, 2311 EZ Leiden (NL)
(74) Representative: V.O.

(57) **Abstract**

The present application pertains to a photonic in-plane chip coupling product including a support with a first and a second stack, each comprising a carrier and an optical component. The first stack has a carrier with a mounting surface and an opposing carrier surface carrying the first optical component, which has a first guided optical mode. Likewise, the second stack has a carrier and an optical component, featuring a second guided optical mode. These stacks are aligned so that the centers of their respective mode field distributions coincide. To minimize thermal deformation, at least one carrier in each stack includes layers of different materials with mutually different thermal expansion coefficients. Therewith a total thermal deformation between the mounting surfaces and the centers of the mode field distributions is minimized.

## Description

### Field of the invention

The present invention is directed at a photonic product for in-plane chip coupling operating at cryogenic temperatures. The present invention is further directed at a method of manufacturing the same.

### Background

In Photonic Integrated Circuits (PICs), a plurality of components of a photonic circuit is integrated into a single chip. PICs offer many advantages over bulk optical systems, including small footprints, low weight and power consumption, better scalability and manufacturability, and better mechanical and optical stability. PIC technology is therefore considered crucial for applications in quantum and space-qualified devices.

To couple light in and out of a PIC chip, a low-loss interface between the chip and an adjacent optical component is required. These devices must be able to operate in harsh conditions, i.e. in vacuum and at cryogenic temperatures down to 4 K and below.

Ideally, PIC chips are manufactured and assembled with adjacent optical components at normal ambient temperatures, such as room temperatures, and only brought into cryogenic conditions thereafter. In the assembly process the adjacent optical components, e.g. the PIC chip and an optical fiber need to be aligned before they are fixed to each other. However, the adjacent optical components are typically not identical. For example, the adjacent optical components may be composed of mutually different materials which may have mutually different dimensions. Therewith, their introduction into cryogenic conditions would cause a temperature-dependent optical misalignment between the components to appear due to thermal deformation, which hampers their ability to function in these environments.

The paper "Realignment-free cryogenic macroscopic optical cavity coupled to an optical fiber", written by Fedoseev et al. in 2022, arXiv:2301.06609v1 [physics.optics] 16 Jan 2023, is directed at a cryogenic set-up where an optical Fabry-Perot resonator is coupled to a single-mode optical fiber without realignment during cooling down. The system described therein maintains coupling efficiency through an axially symmetric design of the fiber-coupled resonator, such that the setup is rotationally symmetric around the optical axis. However, due to this restriction to a rotationally symmetric designs, this approach is less attractive for general application in PICs, because such assemblies typically cannot leverage this symmetry relation in the manner therein disclosed. There is therefore a need for an approach that is more generally applicable and scalable. At least the approach should be suitable for application in PICs.

### Summary of the invention

In order to address the above-mentioned need, there is provided herewith, in accordance with a first aspect of the invention, a photonic product, comprising: a support, a first stack on the support and a second stack on the support. The first stack comprises a first carrier and a first optical component. The first carrier has a first mounting surface with which it is mounted on the support and, opposite the first mounting surface, a first carrier surface carrying the first optical component, wherein the first optical component has a first guided optical mode. The second stack comprises a second carrier and a second optical component, wherein the second carrier has a second mounting surface with which it is mounted on the support and, opposite the second mounting surface, a second carrier surface carrying the second optical component, wherein the second optical component has a second guided optical mode. The first and the second stack are fixed against each other with a center of a mode field distribution of the first guided optical mode being aligned with a center of a mode field distribution of the second guided optical mode. At least one of the first and the second carrier is provided with a first and a second layer of mutually different materials having mutually different thermal expansion coefficients, to minimize a difference between a total thermal deformation of a portion of the first stack in a direction along a first reference line between the first mounting surface and the center of the mode field distribution of the first guided optical mode and a total thermal deformation of a portion of the second stack in a direction along a second reference line between the second mounting surface and the center of the mode field distribution of the second guided optical mode. Although in practice it may not be possible to reduce the difference in thermal deformation to zero, nevertheless a substantial reduction of this difference, approaching zero, is achieved, i.e. a reduction of the difference in thermal deformation to at most 10% of the mode field size, preferably a reduction to at most 5% of the mode field size. The wording mode size is understood to be herein the size of the smallest mode in case the first guided mode and the second guided optical mode have a different mode size. By way of example, the reduced difference in thermal deformation is less than some tens of nanometers.

As a result of this constraint, i.e. using the combination of mutually different materials in a manner such that a total thermal deformation for said stack portions is the same, it is achieved that the centers of the mode field distributions of the first and the second guided optical modes remain aligned despite varying temperatures, and that the coupling loss between the first and the second stack at cryogenic temperatures is comparable to the coupling loss at room temperatures. The product can therefore operate under a broad range of thermal conditions between ambient and cryogenic conditions, while maintaining alignment between the mode field distributions of the first and the second guided optical modes. In particular, the product according to the first aspect of the invention can be manufactured at room temperature, and is able to operate at cryogenic temperatures, such as below 120 K and, more specifically, at temperatures on the order of 4 K. The invention therefore alleviates an important bottleneck in the development of PIC technologies for quantum systems and PIC-based space devices. It is noted that "room temperature" is normally considered to be about 300 K. However, in practice, the actual temperature at a manufacturing facility may be lower or higher. Due to the fact that the product is designed to maintain its alignment in a broad range of temperatures, this also implies a substantial tolerance on the temperature at which the product is manufactured. Accordingly, room temperature in the context of the present application may be interpreted broadly, e.g. in the range of 280 to 320 K.

In accordance with some embodiments of the invention, a geometry of each of the stacks is symmetric with respect to the center position of the corresponding guided optical mode in a direction transverse to a direction of the corresponding guided optical mode and to the direction of the respective reference line. Because photonic products comprising stacks which are thusly symmetrical do not require any compensation in lateral directions with respect to the propagation direction of the guided modes, these embodiments feature the most simple case of alignment between the two modes of the respective stacks.

In accordance with some embodiments of the invention, the first optical component is an optical fiber and the second optical component is an on-chip photonic structure. In an example thereof the optical fiber is a single mode optical fiber. In alternative embodiments, the fiber may be a multi mode optical fiber. Although light coupling is more easily maximized using multi-mode optical fibers, single mode fibers are sometimes required, for example to avoid modal dispersion effects, to allow for a larger bandwidth (allows to transmit larger amounts of data over great distances), or to mitigate losses. In addition, for many quantum applications a restriction to a single spatial mode (and, where needed, only one polarization for polarization-maintaining single mode fibers) is required to enable the required indistinguishability of photonic qubits.

In accordance with some embodiments of the invention, the optical fiber, e.g. a single mode optical fiber, is accommodated in a V-groove in the carrier surface of the first carrier. A V-groove is suitable for precise positioning and secure holding of the fiber, which reduces the risk of lateral movement that could lead to misalignment. V-grooves are also highly suitable for the implementation of fiber arrays, because they enable precise and secure positioning for each fiber, which enables high-density packing in addition to consistent alignment.

In accordance with some embodiments of the invention, the single mode optical fiber is one of a plurality of single mode optical fibers.

In accordance with some embodiments of the invention, the photonic integrated circuit comprises a first silicon oxide layer, an Si3N4 waveguide and a second silicon oxide layer provided on a silicon substrate that is part of the carrier.

In accordance with some embodiments of the invention, the carrier of the second stack comprises a layer of beads adhered between the silicon substrate and a lower arranged carrier layer. The beads are chosen from a material and having dimensions suitable for minimizing the misalignment caused by the thermal deformation caused by the introduction of the photonic product into cryogenic conditions. Furthermore, the beads are adhered between the silicon substrate and the lower arranged carrier layer using an adhesive that is functional both at room temperature and at cryogenic temperatures. The beads in the layer of adhesive provide for a well-defined target height of the layer, while the adhesive in the layer allow for minor height adaptations during temperature change/decrease. It is not necessary that the beads are densely packed in the layer of adhesive.

The photonic product may comprise any combination of optical components. Typically the photonic product may comprise a photonic chip that is optically coupled at its input and its output to a respective optical fiber, but the photonic product may also comprise two or more optically coupled photonic chips.

In accordance with some embodiments of the invention, one or more of the optical components is a component of a quantum photonic computer or a quantum communication system, or of a quantum sensor, or of another quantum system. Examples of such components are a quantum source, a quantum memory, a single-photon detector based on superconductors and the like. In such embodiments a stack comprising such a component may include one or more layers of a type III-V material, e.g. InP, or of another material, e.g. diamond used in PIC technologies or in Quantum technologies.
The presently claimed approach for the design of the optical in-plane fiber-to-chip coupling device and its method of manufacturing is particularly suitable for quantum applications, as the latter involve stringent requirements for precise alignment and minimal coupling losses. Moreover, they require cryogenic temperatures for their operation, to minimize thermal noise, maintain quantum coherence, and enable superconducting properties necessary for optimal performance.

In accordance with some embodiments of the invention, the optical fiber is accommodated in a V-groove of a carrier layer from the same material as a material of a carrier layer in the second stack. By choosing materials in one of the carriers to be the same as a material in the other carrier, thermal deformation effects are advantageously reduced to achieve levels acceptable for functionality, because such a choice introduces a common thermal expansion coefficient.

In accordance with a second aspect of the invention, there is provided herewith a method of manufacturing a photonic product, comprising: providing a support; providing a first stack on the support and providing a second stack on the support. The first stack comprises a first carrier and a first optical component, wherein the first carrier has a first mounting surface to be mounted on the support and, opposite the first mounting surface, a first carrier surface carrying the first optical component, wherein the first optical component has a first guided optical mode. It is noted that the carrier surface may be provided with a surface structure, e.g. in the form of one or more grooves for accommodating respective optical components. The second stack comprises a second carrier and a second optical component, wherein the second carrier has a second mounting surface to be mounted on the support and, opposite the second mounting surface, a second carrier surface carrying the second optical component, wherein the second optical component has a second guided optical mode. The method further comprises aligning a center of a mode field distribution of the first guided optical mode with a center of a mode field distribution of the second guided optical mode and fixing the first and the second stack with their aligned centers of their mode field distribution. At least one of the first and the second carrier is provided with a first and a second carrier layer of mutually different materials having mutually different thermal expansion coefficients, to minimize a difference between a total thermal deformation of a portion (further denoted as relevant portion) of the first stack in a direction along a line between the first mounting surface and the center of the mode field distribution of the first guided optical mode and a total thermal deformation of a portion (further denoted as relevant portion) of the second stack in a direction along a line between the second mounting surface and the center of the mode field distribution of the second guided optical mode. In some embodiments more than two layers of mutually different materials may be required in a carrier. In one example thereof the carrier of the first stack comprises a first layer having a V-shaped groove with an optical fiber accommodated therein. In this example a portion of the optical fiber between its contact points with the V-groove and the center of the guided mode forms in fact a second layer of the first carrier. Therewith the height of the center of the guided mode depends both on the thermal deformation of the first layer of the first carrier and the second layer of the first carrier formed by the portion of the optical fiber referred to. A proper compensation for the thermal deformation can be achieved by also providing an additional layer in the second carrier.

In the present invention, a difference between a total thermal deformation of the relevant portion of the first stack and a total thermal deformation of the relevant portion of the second stack is minimized. The relevant portion in either stack is defined as the height of the center of the mode field distribution of the guided mode of the optical component, relative to the support. This is achieved by the fact that at least one of the first and the second carrier has a first and a second carrier layer of mutually different materials having mutually different thermal expansion coefficients. An advantage of providing these layers is that, depending on the thickness and coefficients of thermal expansion chosen for the layers, the temperature-dependent misalignment can be compensated for, such that the centers of the mode field distributions of the first and the second guided optical modes remain aligned and the coupling loss between the first and the second stack at cryogenic temperatures is minimized compared to (kept within maximum of 10-15% from) the coupling loss at room temperatures. Thermal deformation may refer to either thermal expansion, or to thermal contraction. Either one may occur as a consequence of the photonic product being brought into changed temperature conditions. In the case of ideal alignment, the centers of the mode field distributions of the two guided modes completely and perfectly overlap. In practice however, minor deviations may occur. Such deviations typically are already present when the product is pre-aligned at normal ambient temperatures. Accordingly, minor coupling losses may still appear due to thermal deformation when bringing the photonic product into cryogenic temperatures, but these effects in the present invention are made very small or negligible. The product can therefore operate under a broad range of temperatures between ambient and cryogenic conditions. The invention therefore alleviates an important bottleneck in the development of PIC technologies for quantum systems and PIC-based space devices.

In accordance with some embodiments of the invention, the method comprises aligning the mode field distribution centers of the first optical component and the second optical component relative to each other so as to maximize the light coupling between said optical components. Due to tolerances in the manufacturing processes of the individual components, the mode field distributions of the first and the second guided optical modes may initially be misaligned after assembly of the stacks from these components. The misalignment is exacerbated when the product is brought into cryogenic conditions. By maximizing the light coupling between the optical components before final assembly, this misalignment is also minimized.

In accordance with some embodiments of the invention, the method comprises using one of an on-chip spot-size converter, a WAFT (Waveguide Array to Fiber Transposer), and an interposer structure. Application of a WAFT is described for example in EUROPRACTICE | Teem Photonics (europractice-ic.com) and Waveguide to fiber optical transposer - WAFT series - TEEM PHOTONICS (directindustry.com) Use of the abovementioned components aids in mode-matching the guided modes of the first and the second stack and thereby further aids in maximizing the light coupling between the optical components before the product is brought into cryogenic conditions.

In accordance with some embodiments of the invention, the alignment steps are performed at room temperature and the difference between the total thermal deformation of the relevant portion of the first stack and the total thermal deformation of the relevant portion of the second stack is minimized for use of the photonic product at a cryogenic temperature. Advantageously, the photonic product manufactured by a method according to these embodiments can therefore be manufactured at room temperatures, such that it is suitable for various applications in which such a product must be able to operate at cryogenic temperatures of various levels. Examples of such applications include transition-edge sensors (which often operate in the neighborhood of 100 K or below), infrared and submillimeter astronomy (wherein detectors and instruments often operate at temperatures below 77 K, or down to 4 K and below), and photonics-based quantum devices (wherein the product must be able to operate at temperatures reaching 4 K and below).

In accordance with some embodiments of the invention, the first optical component is a (single mode) optical fiber and the second optical component is an on-chip photonic structure. Configurations featuring a single mode optical fiber are more critically affected by thermal deformation effects than configurations that instead feature multi-mode optical fibers, because single mode optical fibers have smaller cores and smaller mode field diameters. This makes efficient coupling in systems that use the former more difficult to achieve than in systems using the latter. Also, any coupling that is achieved is more fragile to thermal deformation effects. The method according to the second aspect of the invention is therefore especially advantageous for systems that use single mode optical fibers.

In accordance with some embodiments of the invention, the method comprises accommodating the single mode optical fiber in a V-groove in the carrier surface of the first carrier. V-grooves can be easily fabricated using standard semiconductor processing techniques such as lithography and etching. This makes them cost-effective for mass production and compatible with existing manufacturing infrastructure.

In accordance with some embodiments of the invention, the (single mode) optical fiber is one of a plurality of optical fibers, and the on-chip photonic structure comprises a plurality of waveguides, each of the waveguides corresponding with a respective one of the optical fibers. In these embodiments, a center of the mode field distribution of each of the plurality of waveguides is aligned with a center of the mode field distribution of a respective optical fiber. The light coupling between each waveguide and each respective optical fiber may then be maximized. Moreover, each pair of waveguide and optical fiber may be connected via one or more of an on-chip spot-size converter, a WAFT (Waveguide Array to Fiber Transposer), and an interposer structure. Having multiple pairs of fibers and waveguides in a system provides increased bandwidth and redundancy, allows for parallel processing, and it increases flexibility and scalability.

In accordance with some embodiments of the invention, the method comprises accommodating each of the single mode optical fibers in a respective V-groove in the carrier surface of the first carrier.

In accordance with some embodiments of the invention, the first carrier has a respective cantilever-like structure for each optical fiber. Since the ends of the optical fibers may protrude beyond the carrier with some length, additional mismatches between the modes may consequently occur when the photonic product is brought into cryogenic conditions. For example, the fiber may deform more or less than the carrier, or alternatively, the fiber may not be perfectly centered. The cantilever-like structure provides the protruding parts of the fibers with support, and thereby accommodates for this additional mismatch. The cantilever-like structure is however not completely rigid, therewith providing a further means for alignment. Advantageously, the difference in coupling loss between room temperature and cryogenic temperatures is thereby further reduced.

In accordance with some embodiments of the invention, the method comprises creating the cantilever-like structures by a dicing process. This dicing may for example be performed using a diamond blade or using laser dicing, or focused ion beam (FIB) milling.

In accordance with some embodiments of the invention, the single mode optical fibers each have a free end extending outside its respective groove towards the waveguide. In these embodiments, the use of cantilever-like structures for providing support to the optical fibers may not be necessary, or alternatively the supported the optical fiber may have an end portion that protrudes beyond the cantilever-like structures. Having a free end of the optical fiber can be advantageous in fiber optic sensing applications. It allows the exposed fiber end to directly interact with an environment or sample, enabling accurate and sensitive measurements of parameters such as temperature, pressure, strain, or chemical composition.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1A schematically illustrates, in a plane parallel to a propagation direction of a guided mode, an embodiment of a photonic product in accordance with the first aspect of the invention.
Figures 1B and 1C schematically illustrate, in a plane transverse to the propagation direction of the guided mode, respectively the first carrier and the second carrier mounted on the support of the same embodiment.
Figure 1D shows a top-view of the photonic product of Figures 1A-1C.
Figure 2A schematically illustrates, in a plane parallel to a propagation direction of a guided mode, an alternative embodiment of a photonic product in accordance with the first aspect of the invention.
Figures 2B schematically illustrates, in a plane transverse to the propagation direction of the guided mode, the first stack of the same embodiment.
Figure 3A schematically illustrates, in a plane parallel to a propagation direction of a guided modes, an alternative embodiment of a photonic product in accordance with the first aspect of the invention..
Figures 3B and 3C schematically illustrate, in a plane transverse to the propagation direction of the guided modes, respectively, the first carrier and the second carrier of the same embodiment.
Figure 3D shows a top-view of the photonic product of Figures 3A-3C.
Figure 4 schematically illustrates an embodiment of the method in accordance with the second aspect of the invention.

### Detailed description

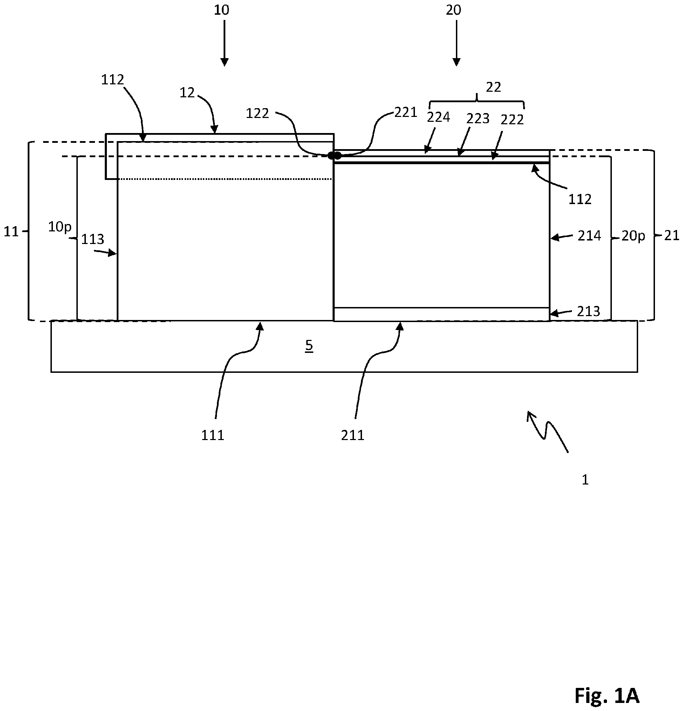

Figure 1A schematically illustrates an embodiment of a photonic product 1 in accordance with the first aspect of the invention. The photonic product 1 comprises a support 5, upon which a first stack 10 and a second stack 20 are mounted. The first stack 10 comprises a carrier 11 and a first optical component 12. The carrier 11 is mounted with a mounting surface 111 onto the support 5. The carrier 11 carries the optical component 12 with the first carrying surface 112. The second stack 20 comprises a second carrier 21 and a second optical component 22. The second carrier has a second mounting surface 211 with which it is mounted onto the support 5. The second optical component 22 is carried on a second carrier surface 212 of the carrier 21. Furthermore, the first stack 10 and the second stack 20 are fixed against each other with an adhesive fit for cryogenic conditions, such as to connect the first optical component 12 and the second optical component 22 for coupling of a guided optical mode therebetween.

A photonic product such as the one illustrated is typically manufactured and assembled at room temperature. Alignment of the optical modes of the first optical component 12 and the second optical component 22 is achieved at this stage. This typically entails aligning the center 122 of the mode field distribution of the first guided optical mode propagating through the first optical component 12 with the center 221 of the mode field distribution of the second guided optical mode propagating through the second optical component 22. The product 1 is only brought into cryogenic conditions once applied in a device that commonly operates in such conditions.

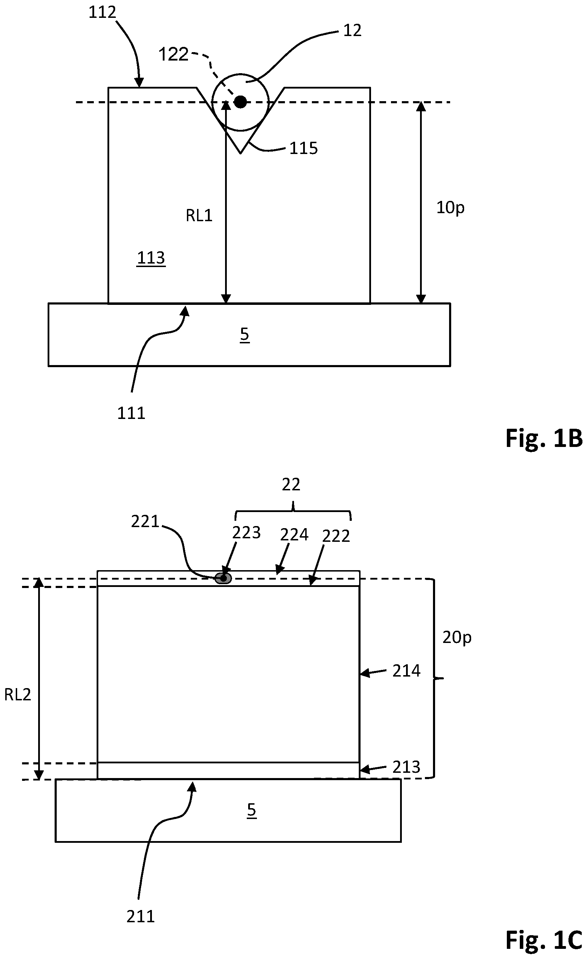

Once the product is brought into cryogenic conditions, thermal deformation will cause the layers and the optical component in the first stack 10 and in the second stack 20 to move relative to each other, both vertically and laterally. As shown in figure 1B, the thermal deformation in the first stack may be measured along a reference line RL1 between the first mounting surface 111 and the center 122 of the mode field distribution of the first guided optical mode. The thermal deformation of the second stack 20, as shown in figure 1C, may be measured along a second reference line RL2 between the second mounting surface 211 and the center 221 of the mode field distribution of the second guided optical mode. If the first stack 10 were identical to the second stack 20, then the two stacks would deform equally. Typically, this is however not the case. For example because the stacks have different optical components. For example one stack may comprise an optical waveguide, and at both sides may be provided a respective further stack carrying an optical fiber, one for providing an optical input, and the other for receiving an optical output. In the examples below, each time an optical product comprising a pair of stacks is shown. It will be understood however that an optical product may comprise any number of stacks, for example three stacks that need to be optically coupled.

In the embodiment illustrated in these figures, for example, the second optical component 22 may be smaller in width than the first optical component 12, and may for example have a smaller or larger thermal expansion coefficient than the first optical component 12. The second optical component 22 as illustrated may for example comprise a first silicon oxide layer 222, a silicon nitride (Si3N4) waveguide core 223 and a second silicon oxide layer 224. The first optical component 12 on the other hand may be an optical fiber composed mostly of glass materials. To compensate for these differences, the second carrier comprises multiple layers 213 and 214 of mutually different materials, with predetermined thicknesses, with the thermal expansion coefficients and thicknesses being chosen, such that the thermal deformation of the second stack as a consequence of the photonic product 1 being brought into cryogenic conditions closely approaches the thermal deformation of the first stack 10. In this example, layer 213 may be a glass layer that compensates for the difference between the widths of the optical components 12 and 22. Either one or both of the stacks may be provided with one or more layers that fulfill this purpose. Furthermore, either one or both of the stacks may be alternatively composed, having different materials in alternative embodiments. The layers having mutually different materials with mutually different thermal expansion coefficients make sure that the center 122 of the mode field distribution of the first guided optical mode remains sufficiently aligned with the center 221 of the mode field distribution of the second guided optical mode, after the photonic product is brought into cryogenic conditions, such that the change of alignment between the optical components in mutually neighboring stacks resulting from the change of temperature is very small or negligible. The photonic product 1 consequently functions in a broad range of temperatures.

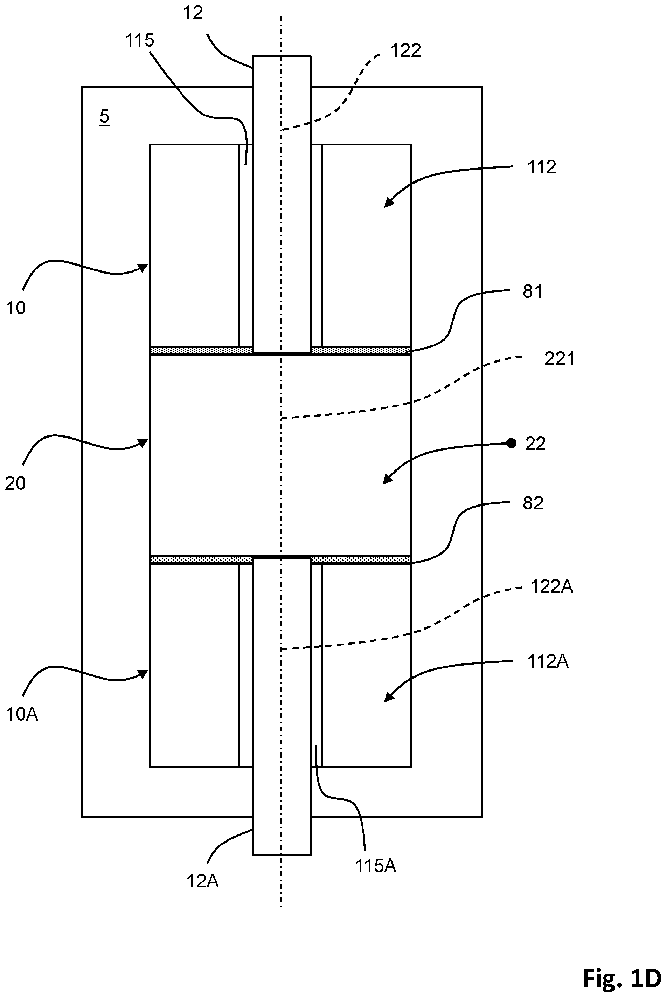

Figure 1D shows the photonic product of Figures 1A-1C in a top-view. Figure 1D also shows a further stack 10A, that carries in a V-groove 115A at its carrier surface 112A a second optical fiber 12A. As shown in Figure 1D, the first stack 10 and the second stack 20 are adhered to each other with a first portion 81 of a cryogenic adhesive and the further stack 10A and the second stack 20 are adhered to each other with a second portion 82 of the cryogenic adhesive. As shown in Figure 1D, the center 122 of the mode field distribution of the first guided optical mode is also laterally well aligned with the center 221 of the mode field distribution of the second guided optical mode. Also the center 122A of the mode field distribution of the guided optical mode of the second optical fiber 12A is laterally well aligned with the center 221 of the mode field distribution of the second guided optical mode. In addition, the alignment of all materials in each stack is such that the respective lateral thermal displacements are the same for all mode centers.

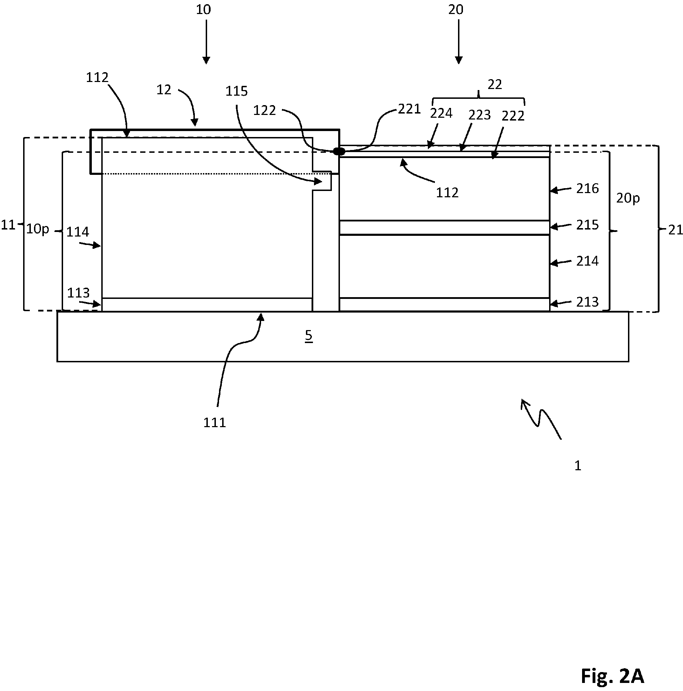

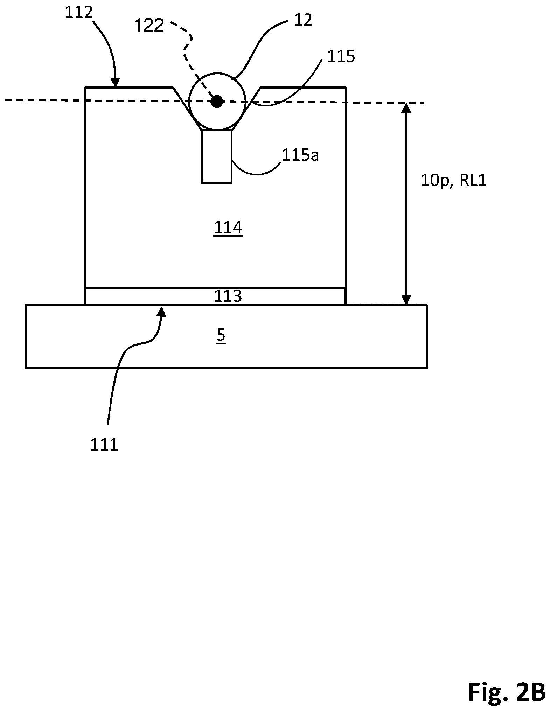

Figure 2 schematically illustrates an alternative embodiment of a photonic product in accordance with the first aspect of the invention, in a plane parallel to the propagation direction of a guided mode. In the embodiment here illustrated, the photonic product 1 is similarly constructed as described above. It comprises a support 5, upon which a first stack 10 and a second stack 20 are mounted. The first stack 10 comprises a carrier 11 and a first optical component 12. The carrier 11 is mounted with a mounting surface 111 onto the support 5. The carrier 11 carries the optical component 12 with the first carrying surface 112. The second stack 20 comprises a second carrier 21 and a second optical component 22. The second carrier has a second mounting surface 211 with which it is mounted onto the support 5. The second optical component 22 is carried on a second carrier surface 212 of the carrier 21. Furthermore, the first stack 10 and the second stack 20 are fixed against each other, such as to connect the first optical component 12 and the second optical component 22 for coupling of a guided optical mode therebetween.

However, in this embodiment the first stack 10 additionally is provided with a cantilever-like structure 115a. The cantilever-like structure 115a extends from the stack 10 in the direction of the optical component 12. Since the optical component 12 may extend with some length from the stack 10 toward the stack 20, the cantilever-like structure 115a provides support to the free end of the optical component 12. The cantilever-like structure 115a in this embodiment extends along part of the length of the free end of the optical component 12, but in alternative embodiments the structure 115a may extend along the full length of the free end of the optical component 12. Furthermore, the stacks 10 and 20 may both comprise multiple carrier surfaces, each carrier surface carrying an optical component. Each optical component may extend with some length from the stack by which it is carried, and consequently may be provided with support from a cantilever-like structure 115a.

The first stack 10 and the second stack 20 differ in the thermal expansion coefficients of the materials and in the width of the portions 10p and 20p of the stacks. The thermal deformation resulting from the product 1 being brought into cryogenic conditions will therefore not be identical between the stacks. In this embodiment, the first stack 10 is therefore provided with a layer 113 in addition to the layer 114. Furthermore, the second stack 20 is provided with layers 213-216. In alternative embodiments, only one of the stacks may be provided with one or more layers of mutually different materials having mutually different thermal expansion coefficients. Within the respective stacks, the adjacent layers of the layers 113 and 114, and of the layers 213-216 are composed of mutually different materials having mutually different thermal expansion coefficients. The layers are chosen with thermal expansion coefficients and thicknesses that yield a thermal deformation in the first stack 10 that is minimally different from the thermal deformation in the second stack 20. This ensures that the alignment between the center 122 of the mode field distribution of the guided mode propagating through the first optical component 12 and the center 221 of the mode field distribution of the second guided mode is only lost to a minimized degree when the product 1 is brought into cryogenic temperatures.

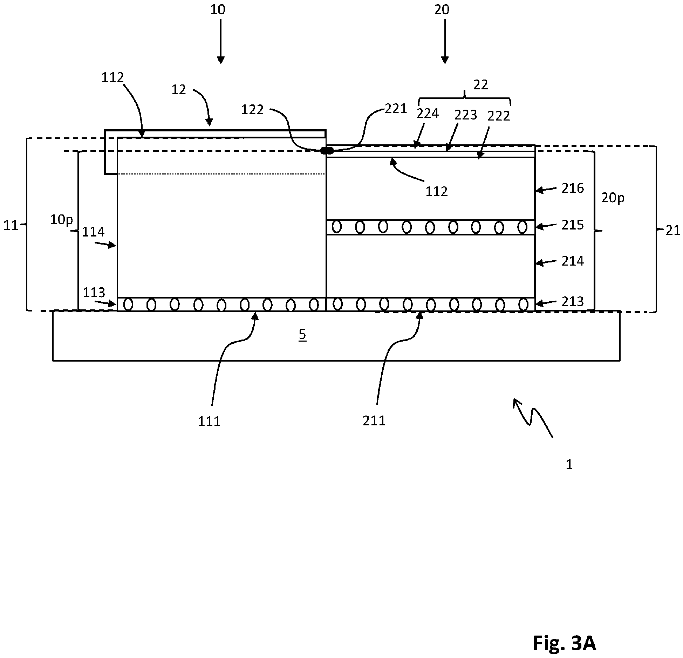

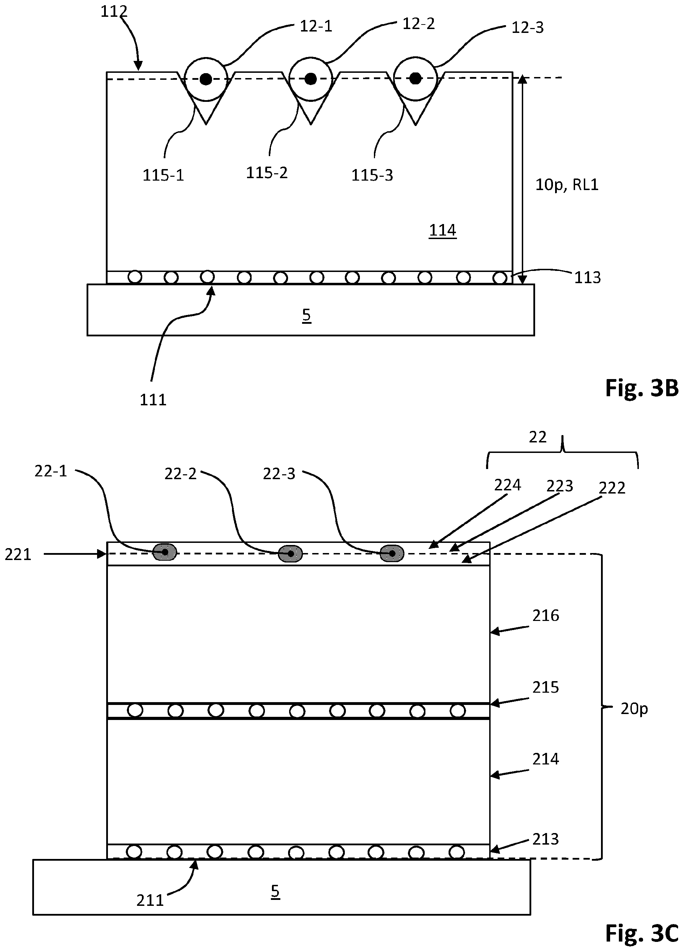

Figure 3A schematically illustrates an alternative embodiment of a photonic product in accordance with the first aspect of the invention, in a plane parallel to a propagation direction of the guided modes. The product 1 comprises a support 5 upon which a first stack 10 and a second stack 20 are mounted. The first stack 10 comprises a carrier 11 and a first optical component 12. The carrier 11 is mounted with a mounting surface 111 onto the support 5. The carrier 11 carries optical components 12-1, 12-2 and 12-3 with first carrying surfaces 112-1, 112-2 and 112-3, as also shown in figure 3B. Figure 3C shows the second stack 20 comprising a second carrier 21 and second optical channels 22-1, 22-2 and 22-3 within optical component 22. The second carrier has a second mounting surface 211 with which it is mounted onto the support 5. The second optical component 22 with the optical channels 22-1, 22-2 and 22-3 is carried on a second carrier surface 212 of the carrier 21. Furthermore, the first stack 10 and the second stack 20 are fixed against each other, such as to connect the first optical components 12-1, 12-2 and 12-3 and the second optical channels 22-1, 22-2 and 22-3 for coupling of guided optical modes therebetween.

The second optical component 22 is for example an optical demultiplexer having its optical channels 22-1, 22-2 and 22-3 at an input side optically coupled to the optical components 12-1, 12-2, 12-3 respectively. The optical components 12-1, 12-2, 12-3 are for example optical fibers. Alternatively, the second optical component 22 is for example an optical multiplexer having its optical channels 22-1, 22-2 and 22-3 at an output side optically coupled to the optical components 12-1, 12-2, 12-3 respectively. Likewise, the optical components 12-1, 12-2, 12-3 are for example optical fibers.

The first stack 10 comprises layers 113 and 114. The layer 113 comprises beads adhered between the support 5 and the layer 114, which are composed of a different material than the layer 114 and which have a different thermal expansion coefficient than the layer 114. The adhesive used in the layer 113 is suitable for being used in a broad range of temperatures, including ambient and cryogenic temperatures. The second stack 20 comprises layers 213-216, wherein adjacent layers are composed of mutually different materials having mutually different thermal expansion coefficient. The layers 213 and 215 in this embodiment are provided with beads adhered respectively between the support and the layer 214, and between the layers 214 and 216. The beads provided in the layers 113, 213 and 215 are composed of materials having predetermined thermal expansion coefficients and have predetermined sizes, such that in combination the layers compensate for a temperature-dependent misalignment caused by thermal deformation. In this embodiment, the beads may be sourced from commercially available beads, which may only be available in predetermined dimensions and materials. This is likely to necessitate providing the stacks with certain combinations of layers comprising beads, such as illustrated in the figure. However, in alternative embodiments, such beads may be custom-made for a specific photonic product. In that case, it may be possible to provide only one of the stacks with a layer comprising beads.

Figures 3B and 3C respectively illustrate the first stack 10 and the second stack 20 in a plane transverse to the propagation direction of the guided modes. The first optical components 12-1, 12-2 and 12-3 are each accommodated in a V-groove 115-1, 115-2, 115-3 of the carrier 11 and respectively positioned to be connected to the second optical components 22-3, 22-2 and 22-1. In this embodiment, the first optical components 12-1, 12-2 and 12-3 are optical fibers which do not extend from the stack 10. However, in alternative embodiments the fibers may extend with some length from the stack 10 and the carrier may optionally be provided with cantilever-like structures for providing the free ends of the fibers with support.

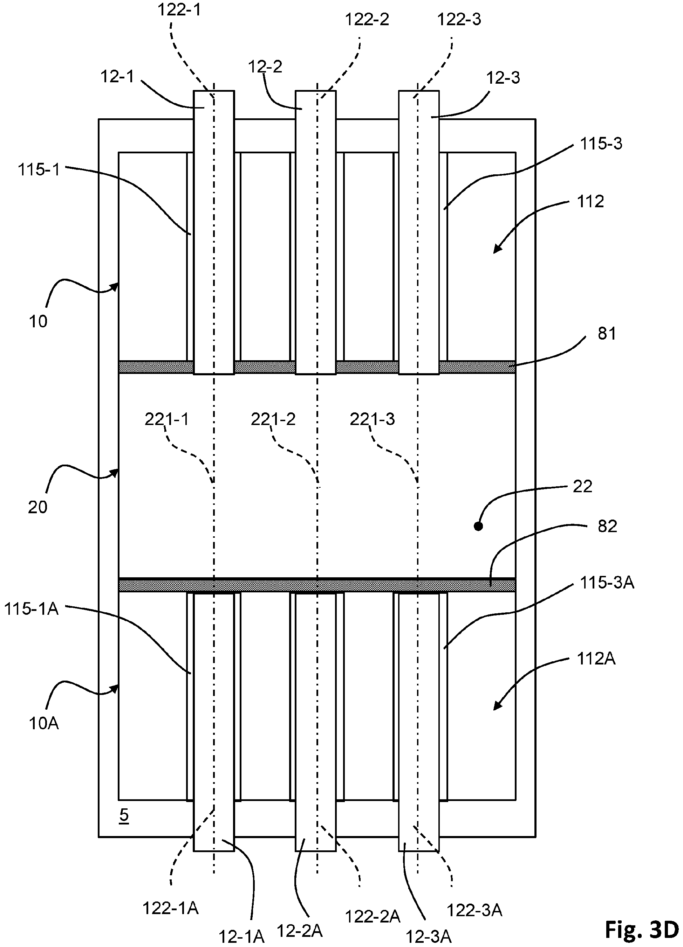

Figure 3D shows a top-view of the photonic product of Figures 3A-3C. Figure 3D also shows a further stack 10A, that carries in a V-grooves 115-1A, 115-2A, 115-3A at its carrier surface 112A a respective second optical fiber 12-1A, 12-2A, 12-3A. As shown in Figure 3D, the first stack 10 and the second stack 20 are adhered to each other with a first portion 81 of a cryogenic adhesive and the further stack 10A and the second stack 20 are adhered to each other with a second portion 82 of the cryogenic adhesive. As shown in Figure 3D, the centers 122-1, 122-2, 122-3 of the mode field distributions of the first guided optical modes is also laterally well aligned with the centers 221-1, 221-2, 221-3 of the mode field distributions of the second guided optical modes. Also the center 122-1A, 122-2A, 122-3A of the mode field distributions of the guided optical modes of the second optical fibers 12-1A, 12-2A, 12-3A are laterally well aligned with the centers 221-1, 221-2, 221-3 of the mode field distributions of the second guided optical modes.

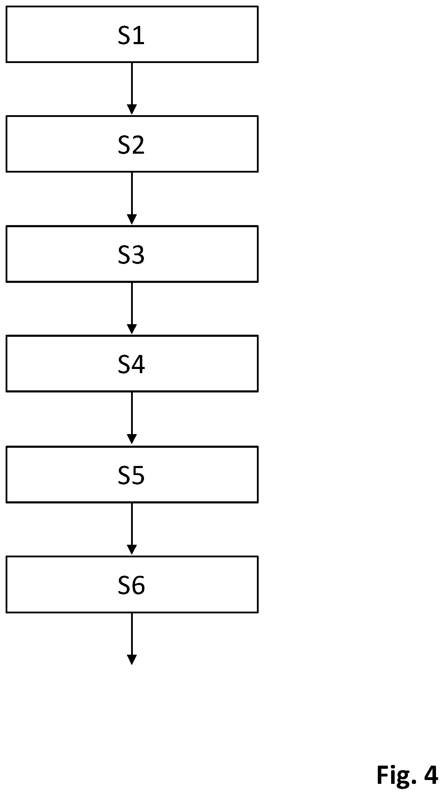

Figure 4 schematically illustrates a method in accordance with the second aspect of the invention. The method comprises a step S1 of providing a support 5.

In step S2 a first stack 10 is provided that comprises a first carrier 11 and a first optical component 12. The first optical component has a first guided optical mode with a mode field distribution that has a first mode field distribution center 122. In an embodiment this step comprises adhering an optical fiber 12 into a V-groove 115 provided in a center of a surface 112 of a silicon chip 113. This avoids lateral thermal displacements of the optical fiber 12 once adhered. In this step a modest pressure may be exerted on top of the first stack, to ensure a good contact of the optical fiber 12 with the V-groove walls, until the adhesive is cured.

In step S3 a second stack 20 is provided that comprises a second carrier 21 and a second optical component 22. The second optical component 22 has a second guided optical mode with a mode field distribution that has a second mode field distribution center 221. In an example the second optical component 22 is already provided on a chip-like support 216, therewith forming a PIC-chip and the PIC-chip 216+22 is adhered to a spacer 214 by applying a layer 215 with glass beads onto the spacer top surface and then placing the PIC chip on top so as to have the target waveguide properly centered (to avoid thermal displacements in the lateral direction). To ensure that the thickness of the adhesive layer 215 is close to its target value (equal to beads' diameter), a modest pressure may be applied onto the top surface of the PIC chip 22 until the adhesive is cured.

It will be clear that steps S1-S3 can be performed in arbitrary order.

Then in step S4, one of the stacks is adhered on the support 5 with a further layer 213, typically comprising beads of a solid material for a consistent vertical positioning. By way of example it is presumed here that the second stack 20 is adhered in this step S4. Alternatively, it can be the first stack 10.

In step S5 the support 5 having the second stack 20 now adhered thereon is held in a fixed position, and the other stack 10 is controllably positioned to align the first mode field distribution center 122 with the second mode field distribution center 221.

When alignment is achieved the other one of the stacks, in this example the first stack 10 is adhered on the support 5 by supplying a syringe comprising a cryogenic compatible adhesive and beads in the gap and allowing the adhesive to cure so as to form the layer 113.

The method further comprises a step S2 of providing a first stack 10 on the support 5. The stack 10 is provided comprising a first carrier 11 and a first optical component 12, wherein the first carrier 11 has a first mounting surface 111 to be mounted on the support 5 and, opposite the first mounting surface, a first carrier surface 112 carrying the first optical component, wherein the first optical component has a first guided optical mode. The method further comprises a step S3 of providing a second stack 20 on the support that comprises a second carrier 21 and a second optical component 22. The second carrier has a second mounting surface 211 to be mounted on the support 5 and, opposite the second mounting surface, a second carrier surface 212 carrying the second optical component 22, wherein the second optical component has a second guided optical mode. The optical components may for example be single-mode or multi-mode optical fibers, waveguides, micro-resonators, or other on-chip photonic structures.

The method further comprises a step S4 of aligning a center 122 of a mode field distribution of the first guided optical mode with a center 221 of a mode field distribution of the second guided optical mode. This step may be performed so as to maximize the light coupling between optical components of the first stack 10 and the second stack 20. In this step one of the stacks is fixed and the other stack is mechanically displaced in XYZ directions until the light coupling is maximized. Once the light coupling between the fiber and the PIC waveguiding structure is maximized, the cryogenic compatible adhesive is applied to fix the two stacks with respect to each other. The assembly is left undisturbed until the adhesive is completely cured. Preferably, the photonic product 1 is able to maintain efficient light coupling between optical components in a broad range of temperatures, including at normal ambient temperatures and at cryogenic temperatures, down to 120 K and below. The alignment step S4 may be performed in normal ambient conditions (at room temperature).

The photonic product, due to various imperfections, will typically deviate from optimal alignment, both in ambient conditions and in cryogenic conditions. In order to achieve a satisfactory result in in the alignment step, it suffices that the height of the stacks from their mounting surface to the center of their guided mode matches approximately, e.g. with a tolerance about 15 µm or even better within a tolerance of 10 µm. The remaining mismatch can then be cancelled in the alignment step.

At least one of the first carrier 11 and the second carrier 21 is provided with a first and a second carrier layer of mutually different materials having mutually different thermal expansion coefficients, to minimize a difference between a total thermal deformation of a portion 10p of the first stack 10 in a direction along a line between the first mounting surface 111 and the center 122 of the mode field distribution of the first guided optical mode and a total thermal deformation of a portion 20p of the second stack 20 in a direction along a line between the second mounting surface 211 and the center 221 of the mode field distribution of the second guided optical mode.

Therewith it is achieved that the alignment step S4 can be performed at room temperature, and that the achieved alignment is at least substantially maintained when the photonic product is cooled down to a lower temperature, for example a cryogenic temperature, e.g. 4K. Furthermore, the step S4 may optionally be performed using one of an on-chip spot-size converter, a WAFT (Waveguide Array to Fiber Transposer), and an interposer structure. These may aid in achieving a maximized light coupling between optical components. Ideally, the centers 122 and 221 then coincide, but in practice small deviations may be present. The method further comprises a step S5 of fixing the first stack 10 and the second stack 20 with their aligned centers of their mode field distributions.

### EXAMPLE

The table below illustrates an example of the method with reference to FIG. 2A, 2B and 3A. Therein the left column indicates the materials used in this example. Relevant data for the first stack and the second stack is shown in the columns of the table headed by the numerals 10 and 20 respectively. For each of the stacks the table comprises a column headed by "Comp" indicating the reference numerals of components in the stack, a column headed by the character "h" indicating a height in micron measured at room temperature (300 K), a column headed by the character "f" specifying a relative thermal deformation coefficient (dimensionless) occurring upon cooling down to cryogenic circumstances (4K) and a column headed by the "f.h" specifying the thermal deformation in micron upon said cooling down.
In this example a photonic product is assembled from a first stack 10 comprising a single mode optical fiber 12 and a second stack 20 comprising a waveguide 22.

The single mode fiber 12 was cleaved to obtain a flat output facet, and glued into a V-grooved silicon chip 11 with a total thickness of 1000 (± 10) µm. The distance from the top surface 113 of the V-grooved chip to the center of the fiber's mode field was 30 µm. The fiber diameter was 125 (± 1) µm, so that the distance from the outer rim of the fiber cladding to the center of the fiber's guided mode was 62.5 µm. Hence in the stack 10, the center of the fundamental guided mode was located on top of, in total, 911 µm of silicon (calculated from the bottom surface of the silicon V-groove chip 11 till the point of contact of the V-groove with the fiber's cladding), and 36 µm of silica glass (from the point of contact of the V-groove with the fiber's cladding till the center of the fiber's mode field). To match the total thickness of silicon oxide (glass) in this assembly to the thickness of the silicon oxide in the second stack 20, a layer 113 of glass beads with a diameter of 70 µm is provided between the bottom surface of the silicon chip 11 and the carrier (a copper holder). The glass beads are embedded in an adhesive with which the silicon chip 11 is adhered to the carrier 5. The 36 µm of silica glass (from the point of contact of the V-groove with the fiber's cladding till the center of the fiber's mode field) and the layer 113 of glass beads resulted in the total thickness of glass in the stack 10 of 106 µm (total thickness of all materials till the center of the fiber's guided mode: The total height h of the center of the fiber therewith equals 1017 µm. The total height change due to the thermal deformation of the materials in the first stack 10 during cool-down to T = 4 K, was calculated to be Δh CTE_fiber ≈ 19.2 µm

The waveguide 22 was available on a silicon chip 216 of a 520 µm. The waveguide 22 on this chip is a 16 µm thick thermally grown silicon oxide on top of the chip 216. The Si3N4 waveguide and the center of the fundamental guided mode was located in the middle of the silicon oxide layer, i.e. 8 µm deep inside the silicon oxide. To match the thickness and thermal expansion of in the second stack to the thickness and thermal expansion of the first stack 10 as closely as possible, a spacer 214 formed by a piece of silicon wafer with thickness of 396 µm is included in the second stack. Therewith the second stack 20 has a total thickness of silicon of 916 µm. Glass beads with a diameter of 50 µm were introduced in a first adhesive layer 215 between the spacer 214 and the chip 216, and also in a second adhesive layer 213 with which the spacer 214 is adhered to the copper support 5. Therefore, the total thickness of glass in the second stack 20 (until the center of the guided mode of the waveguide 22) is 8 µm + 2×50 µm = 108 µm. In the second stack the total height till the center of the guided mode is 1024 µm. The difference of 7 µm with that of the first stack can be easily compensated by the active alignment step as specified before. As shown in the table, the total height change due to the thermal deformation of the materials in the second stack 20 as a result of a cool-down to T = 4 K, was calculated to be Δh CTE_PIC ≈ 19.3 µm. This provides a very good match to the expected height change (19.2 µm) of the first stack 10 with the fiber 12. Hence, provided that at room temperature (300K) the center 122 of the mode field distribution of the first guided optical mode is sufficiently aligned with the center 221 of the mode field distribution of the second guided optical mode, this sufficient alignment is maintained when the photonic product 1 is cooled down to a cryogenic temperature, e.g. 4K.

| **Material** | **10** | | | | **20** | | | |
|---|---|---|---|---|---|---|---|---|
| | Comp. | h | f | f·h | Comp. | h | F | f·h |
| | | [um] | [] | [um] | | [um] | [] | [um] |
| **glass** | 12 | 36,0804 | -0,008 | -0.289 | 222 | 8 | -0,008 | -0,06 |
| | 113 | 70 | -0,008 | -0,560 | 215 | 50 | -0,008 | -0,40 |
| **subtotal** | | | | | 213 | 50 | -0,008 | -0,40 |
| | | **106,0805** | | **-0,849** | | **108,00** | | **-0,864** |
| | | | | | | | | |
| **silicon** | 114 | 911 | 0,022 | 20,042 | 216 | 520 | 0,022 | 11,44 |
| | | | | | 214 | 396,3 | 0,022 | 8,72 |
| **subtotal** | | **911** | | **20,042** | | **916,3** | | **20,16** |
| | | | | | | | | |
| **TOTAL** | | **1017,08** | | **19,193** | | **1024,30** | | **19,295** |

In this example the difference in thermal deformation measured along the reference line in the first stack and the reference line in the second stack is only about 0.1 micron.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and design of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. A photonic product, comprising:
a support (5);
a first stack (10) on the support that comprises a first carrier (11) and a first optical component (12), wherein the first carrier (11) has a first mounting surface (111) with which it is mounted on the support and, opposite the first mounting surface, a first carrier surface (112) carrying the first optical component, wherein the first optical component has a first guided optical mode;
a second stack (20) on the support (5) that comprises a second carrier (21) and a second optical component (22), wherein the second carrier (21) has a second mounting surface (211) with which it is mounted on the support (5) and, opposite the second mounting surface, a second carrier surface (212) carrying the second optical component, wherein the second optical component has a second guided optical mode;
wherein the first and the second stack (10, 20) are fixed against each other with a center (122) of a mode field distribution of the first guided optical mode being aligned with a center (221) of a mode field distribution of the second guided optical mode;
wherein at least one of the first and the second carrier (11, 21) is provided with a first and a second layer (113, 114; 213, 214, 215, 216) of mutually different materials having mutually different thermal expansion coefficients, to minimize a difference between a total thermal deformation of a portion of the first stack (10) in a direction along a first reference line (RL1) between the first mounting surface (111) and the center (122) of the mode field distribution of the first guided optical mode and a total thermal deformation of a portion of the second stack (20) in a direction along a second reference line (RL2) between the second mounting surface (211) and the center (221) of the mode field distribution of the second guided optical mode.

2. The photonic product according to claim 1, wherein a geometry of each of the stacks (10, 20) is symmetric with respect to the center position (122, 221) of the corresponding guided optical mode in a direction (X) transverse to a direction (Y) of the corresponding guided optical mode and to the direction (Z) of the respective reference line (RL1, RL2).

3. The photonic product of claim 1, wherein the first optical component (12) is an optical fiber and the second optical component (22) is an on-chip photonic structure, the optical fiber preferably being a single mode optical fiber.

4. The photonic product according to claim 3, wherein the optical fiber is accommodated in a V-groove (115) in the carrier surface (112) of the first carrier.

5. The photonic product according to claim 4, wherein the V-groove (115) is provided in a carrier layer (114) from the same material as a material of a carrier layer (214, 216) in the second stack.

6. The photonic product according to claim 3, 4 or 5, wherein the optical fiber (12a) is one of a plurality of optical fibers (12a, 12b, 12c).

7. The photonic product according to claim 6, wherein the first carrier has a respective cantilever-like structure (115a, 115b, 115c) for each optical fiber.

8. The photonic product according to claim 6, wherein the optical fibers (12a, 12b, 12c) each have a free end extending outside its respective groove towards the waveguide (223a, 223b, 223c).

9. The photonic product according to claim 1, wherein second optical component comprises a first silicon oxide layer (222), an Si3N4 waveguide (223) and a second silicon oxide layer (224) provided on a silicon substrate (216) that is part of the carrier (21).

10. The photonic product according to any of the preceding claims, wherein the carrier (21) of the second stack (20) comprises a layer (215) of beads adhered between the silicon substrate (216) and a lower arranged carrier layer (214).

11. The photonic product, according to any of the preceding claims, wherein one or more of the optical components is a component of a quantum photonic processor.

12. A method of manufacturing a photonic product (1), comprising:
providing (S1) a support (5);
providing (S2) a first stack (10) that comprises a first carrier (11) and a first optical component (12), the first optical component having a first guided optical mode with a mode field distribution having a first mode field distribution center (122),
providing (S3) a second stack (20) that comprises a second carrier (21) and a second optical component (22), the second optical component having a second guided optical mode with a mode field distribution having a second mode field distribution center (221);
adhering (S4) one (20) of the stacks on the support (5);
holding (S5) the support in a fixed position, while controllably positioning the other one (10) of the stacks to align the first mode field distribution center (122) with the second mode field distribution center (221); adhering (S6) the other one (10) of the stacks on the support (5) when upon achieving alignment between the first mode field distribution center (122) with the second mode field distribution center (221);
wherein at least one of the first and the second carrier (11, 21) is provided with a first and a second carrier layer (213, 214) of mutually different materials having mutually different thermal expansion coefficients, to minimize a difference between a total thermal deformation of a portion (10p) of the first stack (10) in a direction along a line between the first mounting surface (111) and the center (122) of the mode field distribution of the first guided optical mode and a total thermal deformation of a portion (20p) of the second stack (20) in a direction along a line between the second mounting surface (211) and the center (221) of the mode field distribution of the second guided optical mode.

13. The method according to claim 12, comprising aligning the mode field distribution centers of the first optical component and the second optical component relative to each other so as to maximize the light coupling between said optical components.

14. The method according to claim 12, using one of an on-chip spot-size converter, a WAFT (Waveguide Array to Fiber Transposer), and an interposer structure.

15. The method according to any of the claims 12 to 14, wherein the alignment steps are performed at room temperature and wherein the difference between the total thermal deformation of the portion (10p) of the first stack (10) and the total thermal deformation of the portion (20p) of the second stack (20) is minimized for use of the photonic product at a cryogenic temperature.

16. The method according to claim 12, the method comprises creating one or more cantilever-like structures (115a, 115b, 115c) for supporting a respective optical fiber by a dicing process.
